# EUROPEAN PATENT SPECIFICATION

(11) **EP 3 274 620 B1**
(45) Date of publication and mention of the grant of the patent: **13.02.2019**
(21) Application number: 16711838.9
(22) Date of filing: 25.03.2016
(51) Int. Cl.: F21K 99/00, F21V 8/00, F21Y 113/00

(54) **LIGHTING MODULE**
LEUCHTE
MODULE D'ECLAIRAGE

(30) Priority: 27.03.2015 GB 201505275
(43) Date of publication of application: 31.01.2018
(73) Proprietor: Jaguar Land Rover Limited, Coventry, Warwickshire CV3 4LF (GB)
(72) Inventor: BROWN, Christopher, Coventry Warwickshire CV3 4LF (GB); MOFFAT, Cora, Coventry Warwickshire CV3 4LF (GB); BELLAMY, Christopher, Coventry Warwickshire CV3 4LF (GB); ATKINSON, Matthew, Coventry Warwickshire CV3 4LF (GB); BOOKER, Thomas, Coventry Warwickshire CV3 4LF (GB)
(74) Representative: Westcott, Matthew John George
(86) International application number: PCT/EP2016/056713
(87) International publication number: WO 2016/156269

(56) References cited:
- DE-A1-102013 212 906
- US-A1- 2009 021 139
- US-A1- 2009 206 758
- US-A1- 2011 164 429
- US-A1- 2011 228 555
- US-A1- 2013 188 387

## Description

### FIELD OF THE INVENTION

The present disclosure relates to a lighting module particularly, but not exclusively, for use in a lighting system. Aspects of the invention relate to a lighting module, a lighting system, a vehicle comprising a lighting module, a vehicle comprising a lighting system, a cabin interior lighting system and control methods to vary the intensity of light emitted by low colour temperature white light and/or high colour temperature white light.

### BACKGROUND OF THE INVENTION

Lighting modules or lamps are well known. Lighting modules are often used in vehicle cabins and may be located in the headliner in the front of the cabin. The modules illuminate the cabin, typically when the car is stationary, so that the occupants can see to perform basic tasks such as fastening their seatbelts or inserting the ignition key. Such lighting modules are also known as courtesy lights, cabin lights or dome-lights.

Vehicle occupants can control the illumination of the courtesy light by operating a simple switch. As well as being able to toggle the illumination on or off, most cabin lighting systems provide a third, automatic function, whereby the lights will turn on when the system senses a door has been opened, which allows the vehicle occupants to enter or exit the cabin more easily. In some known examples, upon closing the vehicle doors, the cabin lights gradually dim over a period of time, allowing an occupant sufficient time in which to find the ignition and to fasten their seat belts. In order to improve the driver's night vision and to ensure no white light exits through the rear of the cabin whilst the vehicle is in motion, the engine ignition may also trigger the interior cabin lights to turn off.

In addition to the courtesy light, "task lights" are often fitted in the rear of the cabin interior, above the rear occupant seats. Task lights emit a collimated beam of light that typically illuminates a small and specific region of the cabin so as to allow rear occupants to perform simple tasks, while the car is in motion, but without producing glare that could distract the driver.

Vehicle occupants have different lighting requirements. For example, an older occupant could see relatively poorly, when compared to a younger occupant, under dimly lit cabin conditions, losing both acuity and contrast sensitivity, which may result in them being unable to read or work effectively.
In current vehicle lighting systems, an occupant can independently switch on and off the task light as and when more light is needed in the cabin. However, task and courtesy lights have a fixed output of light intensity, colour temperature and acuity. The region of the vehicle, that is illuminated by such systems is also fixed, which thereby limits the range of activities that occupants can see to accomplish.
The colour temperature of white light is highly subjective, and therefore current cabin lighting systems cannot meet all occupant requirements. Some occupants prefer warmer, reddish lighting, typically produced by incandescent lights with a colour temperature of around 3000K. Other occupants prefer the cooler, bluish tint of bright white light, emitted with a colour temperature of around 6000K.
The aforementioned problems may also be experienced in other areas where lighting modules are used such as the office or home, as illustrated by the disclosure of patent document US 2013/188387 A1. The present invention aims to address these problems and provide improvements upon the known devices and methods.

### STATEMENTS OF INVENTION

Aspects of the invention are defined in the appended claims.

In the invention there is provided a lighting module comprising: a low colour temperature white light and a high colour temperature white light each arranged to emit light into a mixing optic configured to mix light emitted from the low colour temperature white light and the high colour temperature white light; a lens arranged to distribute mixed light emitted from the mixing optic; and a body comprising an aperture arranged to crop the distributed mixed light emitted from the lens, wherein the mixing optic is substantially S shaped and comprises two arcs having an equal and opposite curvature. Each arc may have an arc angle θ of greater than 200 degrees. The body may comprise an aperture cone.
The aperture may have a modifiable shape. This may be directly modifiable by a user or may be modified by a control module of a lighting system. This is advantageous in that a beam of cropped light exits the aperture and the shape of that beam can be modified to meet illumination requirements of a user.

The mixing optic may comprise an optical lens. Two supports may be arranged to support the arcs of the mixing optic. The lens and aperture may be movable with respect to the mixing optic to direct mixed light emitted from the mixing optic.

The low colour temperature white light may be arranged to emit light with a correlated colour temperature of between about 2700K and about 3500K and a colour rendering index of at least 85. The high colour temperature white light may be arranged to emit light with a correlated colour temperature of between about 5800K and about 6500K and a colour rendering index of at least 75.

In an aspect of the invention there is provided a lighting system comprising a lighting module having the features of the lighting module defined above and a control module arranged to vary the intensity of light emitted by the low colour temperature white light and/or the high colour temperature white light.

The lighting system may comprise a sensing module arranged to sense a physical parameter of an environment surrounding the lighting module, wherein the control module is configured to vary the intensity of light emitted by the low temperature white light and/or the high temperature white light in dependence on the physical parameter.

The sensing module may comprise an ambient light sensor arranged to detect the ambient light levels of the environment. The sensing module may comprise a motion sensor arranged to detect movement in the environment.

The control module may be configured to receive a user input and to vary the intensity of light emitted by the low temperature white light and/or the high temperature white light in response to the user input. The control module may be configured to receive a user-selected illumination intensity input value and to vary the intensity of light emitted by the low colour temperature white light and/or the high colour temperature white light in response to the user-selected illumination intensity input value. The control module may be configured to receive a user-selected colour temperature input value and to vary the intensity of light emitted by the low colour temperature white light and/or the high colour temperature white light in response to the user-selected colour temperature input value. The control module may comprise a control schedule relating illumination intensity set point values to specific periods of the day, and wherein the control module is configured to vary the intensity of light emitted by the low colour temperature white light and/or the high colour temperature white light; based on the control schedule.

In an aspect of the invention there is provided a vehicle having a cabin interior comprising a lighting module having the features of the lighting module as defined above.

In an aspect of the invention there is provided a vehicle having a cabin interior comprising a lighting system having the features of the lighting system as defined above.

In an aspect of the invention there is provided a desk lamp, standard lamp or uplighter comprising a lighting module or lighting system having the features of the lighting module or lighting system as defined above.

In an aspect of the invention there is provided a cabin lighting system for a vehicle. The system may comprise at least one lighting module arranged to illuminate all or part of a cabin interior comprising a low colour temperature white light and a high colour temperature white light. The system may comprise a control module arranged to vary the intensity of light emitted by the low colour temperature white light and/or the high colour temperature white light.

Advantageously, the above mentioned aspect of the invention provides a means of varying the illumination intensity and colour temperature of light emitted by a cabin interior lighting system, by enabling variation of the intensity of the light emitted by a low colour temperature white light and a high colour temperature white light.

White lighting with different colour temperatures is variably suited to different tasks, for example; bright white light (6000K) is most suited to performing work related tasks, since it aids concentration and alertness, whereas warmer white light (3000K) is more calming and hence more suited to recreational reading. Certain tasks, such as applying makeup, require light with a high colour rendering index (CRI) value (>75). Under non-ideal lighting conditions vibrant colours, such as reds and greens, appear washed out and thus do not appear as they would under natural sunlight conditions.

The lighting module may further comprise an optic element arranged to direct light onto an area of the cabin interior. By directing the light onto a specific area of the cabin interior, a user is sufficiently illuminated so that they are able perform a given task, without disturbing other passengers or distracting the driver.

The optic element may further comprise a mixing optic arranged to mix the light emitted from the low colour temperature white light and the high colour temperature white light. By mixing the light emitted from the high and low colour temperature white lights, the lighting module is able to illuminate the cabin interior with a single beam of homogeneously blended light, such that the light observed by the occupant is of a single colour temperature.

The mixing optic may be a curved optical lens, which is flexible thus allowing the low and high colour temperature white lights to be located away from the main body of the lighting module. This allows for the lighting system to be installed in any number of locations within the cabin interior, which might not otherwise be feasible.

The curved optical lens may, in one embodiment, have an S shaped geometry. Each arc (θ) of the S shaped curved optical lens extends over a region, in a circumferential direction, of greater than 200 degrees.

The S shape of the curved optical lens is an advantageous feature of the optic element because it increases the degrees to which the different colour temperature light is mixed. This is caused by the equal but opposite bend of the light pathway, which enhances refraction of light within the core as it travels along the curved optical lens.

The cabin interior lighting system may further comprise a sensing module arranged to sense a physical parameter of the cabin environment, wherein the control module is configured to receive the sensed parameter and to vary the intensity of light emitted by the low temperature white light and/or the high temperature white light in response to the sensed parameter.

In an embodiment, the control module for receiving one or more signals each indicative of a value of the sensed parameter comprises an electronic processor having an electrical input for receiving said one or more signals each indicative of a value of the sensed parameter. The system may comprise an electronic memory device electrically coupled to the electronic processor and having instructions stored therein.

The control module for varying the intensity of light emitted by the low temperature white light and/or the high temperature white light may comprise the processor being configured to access the memory device and execute the instructions stored therein such that it is operable to vary the intensity of light emitted by the low temperature white light and/or the high temperature white light in response to the sensed parameter.

The use of the sensing module in this way enables adjustment of the emitted intensity to suit changing physical parameters within the cabin interior.

The sensing module may comprise an ambient light sensor arranged to detect the ambient light levels in the cabin interior. The ambient light sensor works in combination with the control module to adjust the illumination of the cabin interior, according to the change in ambient lighting conditions within the cabin interior.

The sensing module may comprise a motion sensor arranged to detect the movement of an occupant in the cabin interior. The motion sensor works in combination with the control module to adjust the illumination of the cabin interior, according to the movement of the passenger within the cabin interior.

Advantageously, the above mentioned aspect of the invention provides a means of detecting when each seat is occupied. By sensing the occupancy of each seat, the control module is able to illuminate the seat if it is occupied or switch off the illumination when the seat is unoccupied. The control module may be configured to receive a user input and to vary the intensity of light emitted by the low temperature white light and/or the high temperature white light in response to the user input. For example, the user may input the input via a human machine interface device.

In an embodiment, the control module for receiving one or more signals each indicative of a value of the user input comprises an electronic processor having an electrical input for receiving said one or more signals each indicative of a value of the user input. The system may comprise an electronic memory device electrically coupled to the electronic processor and having instructions stored therein.

The control module for varying the intensity of light emitted by the low temperature white light and/or the high temperature white light may comprise the processor being configured to access the memory device and execute the instructions stored therein such that it is operable to receive the user input and vary the intensity of light emitted by the low temperature white light and/or the high temperature white light in response to the user input.

The control module may advantageously receive user input values so that a user may instruct the lighting system to illuminate the cabin interior with light of a given illumination intensity and colour temperature level, according to their personal preferences, or in order to suit the particular task they are undertaking.

The control module may be configured to receive a user-selected illumination intensity input value and to vary the intensity of light emitted by the low colour temperature white light and/or the high colour temperature white light in response to the user-selected illumination intensity input value.

The control module may be configured to receive a user-selected colour temperature input value and to vary the intensity of light emitted by the low colour temperature white light and/or the high colour temperature white light in response to the user-selected colour temperature input value.

By receiving inputs from the user, the control module is able to update the look up table that is stored in the memory component of the control module. This enables the control module to operate the lighting modules according to an individual user's preferences.

Alternatively or in addition, the control module may further comprise a control schedule relating illuminating intensity set point values to specific periods of the day, and wherein the control module is configured to vary the intensity of light emitted by the low colour temperature white light and/or the high colour temperature white light; based on the control schedule.

In an embodiment, the control module for receiving one or more signals each indicative of a value of the illumination intensity set point values comprises an electronic processor having an electrical input for receiving said one or more signals each indicative of a value of the illumination intensity set point values. The system may comprise an electronic memory device electrically coupled to the electronic processor and having instructions stored therein.

The control module for varying the intensity of light emitted by the low temperature white light and/or the high temperature white light may comprise the processor being configured to access the memory device and execute the instructions stored therein such that it is operable to vary the intensity of light emitted by the low temperature white light and/or the high temperature white light based on the control schedule.

By using the control module to vary the illumination intensity and colour temperature of the emitted light, according to the time of day, the lighting system is able to supplement the naturally occurring light within the cabin interior by, for example, mimicking the rising or setting of the sun.

The low temperature white light may be arranged to emit light with a correlated colour temperature of between about 2700K and about 3500K and/or a colour rendering index of at least 85.The low colour temperature white light illuminates the cabin interior with light that enables a passenger to perform recreational tasks, such as reading. In addition, light with a colour temperature value within this range exhibits a warm or reddish character that is known to aid relaxation.

The high temperature white light may be arranged to emit light with a correlated colour temperature of between about 5800K and about 6500K and/or a colour rendering index of at least 75. Light with a colour temperature value within this range exhibits a cool or bluish character that is known to aid concentration. Hence, the high colour temperature white light illuminates the cabin interior with light that enables a passenger to perform work related tasks more effectively.

The cabin interior lighting system may comprise at least two lighting modules, a first lighting module and a second lighting module. The second lighting module may be arranged to illuminate a different area of the cabin interior than the first lighting module.

The second lighting module works in combination with the first module and the sensing module in order to vary the size of the illuminated area within the cabin interior. The lighting system is therefore capable of providing an acceptable level of illumination, across different regions of the cabin interior so that, for example, an occupant is able to view reading materials of varying sizes, whilst maintaining their preferred seating position.

According to a further aspect of the invention there is provided a vehicle comprising a vehicle cabin and the cabin interior lighting system of an aspect of the invention wherein the lighting module is located at a location within the cabin interior chosen from a list of: a rear side of a front row seat; above a window and forward of an occupant grab handle; above a window and rearward of an occupant grab handle; along the centre line of a roof of the vehicle; and an interior of a vehicle door of the vehicle.

According to a further aspect of the invention there is provided a method of controlling an illumination of a vehicle cabin interior. The method may comprise illuminating the cabin interior, by means of a low colour temperature white light and a high colour temperature white light. The method may comprise sensing a physical parameter of the cabin environment, by means of a sensing module. The method may comprise receiving a user input by means of a human interface device and varying the intensity of light emitted by the low temperature white light and/or the high temperature white light, according to the sensed physical parameter and the user input.

Within the scope of this application it is expressly intended that the various aspects, embodiments, examples, advantages and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 is a schematic drawing of a vehicle provided with a lighting system according to an embodiment of the invention;
Figure 2 is a schematic drawing of a lighting unit of the lighting system in Figure 1;
Figure 3 is a schematic drawing of the profile view of a lighting module of the lighting unit in Figure 2;
Figure 4 is a schematic drawing of an alternative lighting unit for use in the lighting system in Figure 1;
Figure 5 is a schematic drawing of the profile view of a lighting module;
Figure 6 is a schematic drawing of an alternative lighting unit for use in the lighting system in Figure 1;
Figure 7 is a schematic drawing of the rear view of a lighting module of the lighting unit in Figure 6; and
Figure 8 is a schematic drawing of the profile view of a lighting module of the lighting unit in Figure 6.
Figure 9 is an illustration of a light beam provided by a lighting module such as that shown in Figure 5.
Figure 10 is a graph showing intensity variation across the light beam of Figure 9.

### DETAILED DESCRIPTION OF EMBODIMENTS

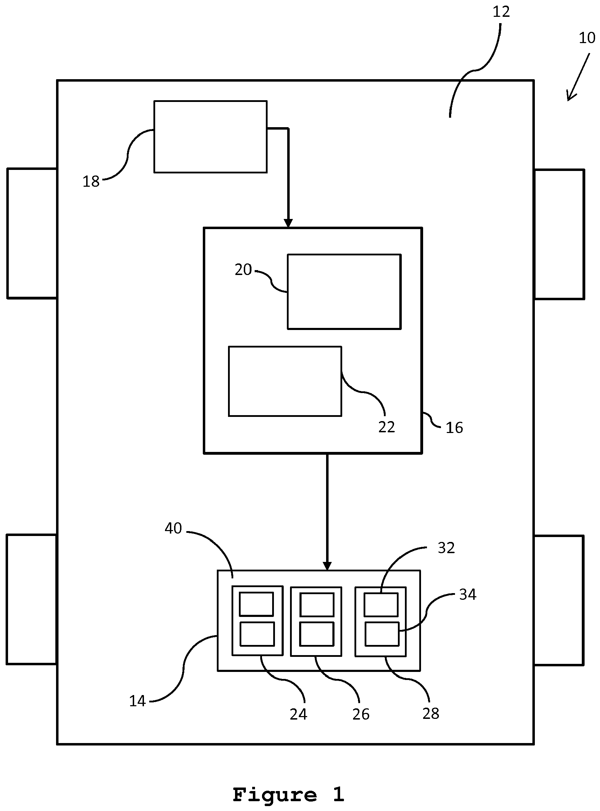

Figure 1 depicts a vehicle 10 including a lighting system. The vehicle 10 also includes an occupant compartment or cabin (not shown) which may have one or more row of seats in a seating area of the cabin. Where the vehicle 10 is arranged with more than one row of seats, the rows are arranged with one row behind the other. The vehicle 10 may further comprise a cargo or luggage area of the cabin (not shown) located behind the seating area. The lighting system includes a control module 16 and a lighting unit 14. The control module 16 includes a sensing module 20 and a human machine interface (HMI) device 22. The lighting unit 14 is electronically connected to the control module 16. The control module 16 is also connected to a battery 18, which is arranged to provide power to the control module 16 and the lighting unit 14. Alternatively the control module 16 may be connected to an alternator or any suitable form of electrical power supply.

The lighting unit 14 includes a task lighting module 24, a reading lighting module 26 and a courtesy lighting module 28, encased within a module enclosure 40. The task lighting module 24 directs light onto a discrete region of the rear cabin that is equivalent to where the occupant's lap would be located, when sitting in an upright position. The task lighting module 24 produces a bright, collimated beam of illumination, which allows an occupant to perform tasks that need high levels of concentration and thus require enhanced visibility, without illuminating other regions of the cabin interior 12 and therefore disturbing other occupants.

The reading lighting module 26 directs light over a wider region of the rear cabin, including the entirety of the occupant's seat and an adjacent, middle seat. The moderately spread beam of illumination, emitted from the reading lighting module 26, creates a diffuse lighting condition, which allows the vehicle occupant to alter their seating position and remain suitably well-lit, so that they can continue to read.

The courtesy lighting module 28 directs light over a broad region of the rear cabin, including the seats and/or the seating foot wells and/or the cargo area of the cabin. The broadly spread beam of illumination, emitted from the courtesy lighting module 28, creates a highly diffuse lighting condition, which allows the vehicle occupant to see the broad region of the cabin.

Each lighting module includes a low colour temperature white light 32 and a high colour temperature white light 34. In the example shown, the low colour temperature white light is a 12V direct current (DC) white light emitting diode (LED) that emits light with an intensity of 120 lumens, within a colour temperature range of 5800-6200K and with a colour rendering index (CRI) value of >75, whilst consuming 1W of electrical power. The high colour temperature white light is a 12V DC white LED that emits light with an intensity of 120 lumens, within a colour temperature range of 3000-3500K and at a CRI value of >85, whilst consuming 1W of electrical power. It will be appreciated that LEDs of other voltage ratings, for example 5V, may also be used. It is commonplace to use LEDs with a supply voltage of 12V ± 3V for automotive applications. Consequently, 12V LEDs may be used without necessitating additional power supply circuitry and attendant complexity.

The HMI device 22 is arranged to monitor a user demand. The user demand is received by a rotatable dial, which is configured to receive an input from the user, such as a colour temperature set point value or an illumination intensity set point value. In addition, the HMI device 22 is configured to receive a user input that determines which lighting module is to be activated, in order to illuminate the corresponding region of the cabin interior 12. Alternative configurations for the HMI device 22 include a touch screen device, a touch sensitive surface or a push button device.

The sensing module 20 is arranged to monitor physical parameters within the cabin interior 12. The parameters of particular interest are ambient illumination intensity and occupancy motion, within the cabin interior 12. The physical parameter sensor can thus either be an ambient light intensity sensor or an occupant motion sensor or a combination of the two.

The ambient light sensor is a photodiode sensor. The photodiode sensor comprises two terminals, across which a voltage is generated when light strikes the surface of the sensor. The voltage generated is proportional to the intensity of the light striking the sensor surface and thus is used to determine the ambient illumination in the cabin interior 12.

The motion sensor is a reflective photoelectric sensor. The reflective photoelectric sensor uses an infrared light transmitter to emit pulses of infrared light and a photoelectric receiver to measure the pulsed infrared light that is reflected back to the sensor. By comparing the light that is emitted by the transmitter with the light that is received by the receiver, the photoelectric sensor determines the distance, absence, or presence of an occupant relative to the sensor. Alternatively the motion sensor may be a seat mounted pressure sensor, which is arranged to detect a change in pressure exerted on a seat of the vehicle.

The sensing module 20 and the HMI device 22 are configured to send the sensed and user inputs, respectively, to the control module 16. The control module 16 is provided with electronic data stored on a memory component of a computer of the vehicle 10. The memory component is a non-volatile memory component. The control module 16 also includes a processor arranged to execute the electronic data stored on the memory component of the control module 16.

The memory component includes a look-up table such that for a given user input, a sensed ambient light intensity level corresponds to a voltage, which is addressed to the lighting unit 14. In this way, the control module 16 is configured to control the lighting unit 14 to illuminate the cabin interior 12 with light of a predetermined intensity and colour temperature, based upon the ambient light condition measured within the cabin.

The control module 16 uses the reading from the motion sensor in the same way such that, for a given user input, a sensed occupant motion corresponds to a voltage, which is addressed to each of the task, reading and courtesy lighting modules 24, 26 and 28 according to which region of the rear cabin requires illuminating.

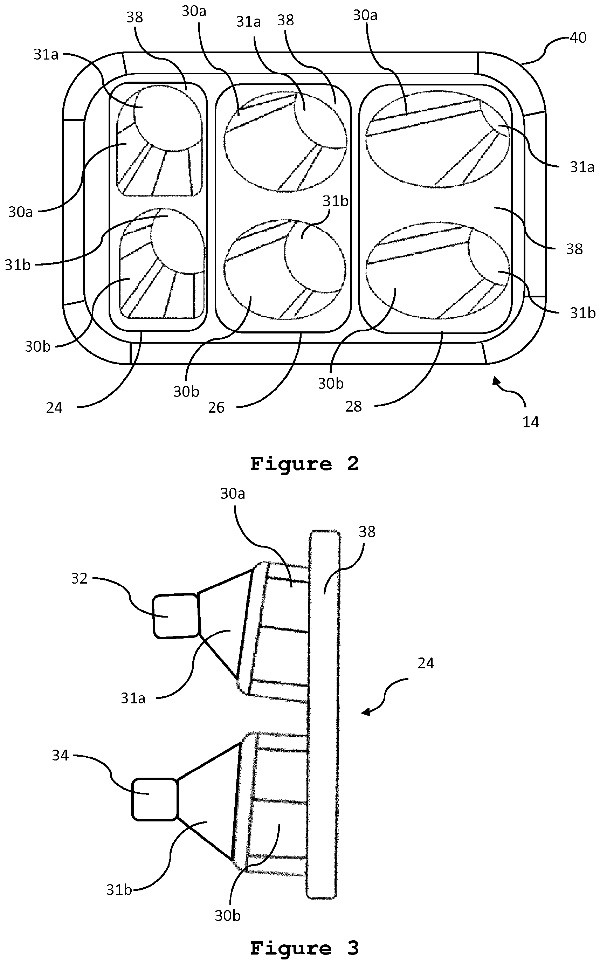

Referring to Figures 2 and 3, a front view of the lighting unit 14 illustrates the enclosure 40 for the lighting unit 14 more clearly, and illustrates a directing optic component and a light support 38 associated with each module. The directing optic includes an upper and a lower component, each comprising an aperture cone or reflector 30a, 30b and a collimating lens 31a, 31b.

The low colour temperature white light 32 is attached to the rear of the upper collimating lens 31a, which in turn is secured to the light support 38 by the upper aperture cone 30a. Similarly, the high colour temperature white light 34 is attached to the lower collimating lens 31b, which is secured to the light support 38 by the lower aperture cone 30b. Each of the lighting modules is housed within the enclosure 40, of the lighting unit 14. Alternatively the enclosure 40, of the lighting unit 14, may form part of each of the task, reading and lighting modules 24, 26 and 28.

Each collimating lens 31a, 31b takes the form of a curved optical lens and is arranged so that any light emitted from each of the low and high colour temperature white lights 32, 34 is made parallel upon refracting through each of the respective lenses.

The aperture cones 30a, 30b each take the form of a paraboloid, with an axis of symmetry projecting outwardly from a vertex positioned at each respective collimating lens 31a, 31b, such that the aperture cones 30a, 30b open outwardly away from the collimating lenses 31a, 31b. The lighting support 38 exhibits an aperture at the site where it meets each of the aperture cones 30a, 30b. The size of the aperture is equal to the outer rim diameter of each respective aperture cone 30a, 30b, so as to allow light to exit the lighting module.

The inner surface of each aperture cone 30a, 30b is mirrored so as to reflect any light that is incident upon it such that the light emitted from the low and high colour temperature white lights 32, 34 is collected and reflected out into the cabin interior 12 in the form of two collimated beams. The inner surface of each aperture cone 30a, 30b may consist of a light absorbing material, if desired, so that a portion of the collimated light is blocked as it passes through the cone and is thereby directed to the target area. In either case, the mirrored surface of each aperture cone 30 opens outwardly, away from the light source, so that the diameter of the reflector at the outer rim is greater than at all other positions along its axis of symmetry. The effect of this is to decrease the degree to which the emitted light is collimated. The aperture cones 38a, 38b are arranged to offset each of the collimating optics 31a, 31b from the outer surface of the lighting support 38, so that each collimating optic 31a, 31b is substantially concealed from the passenger's view, thereby minimising the glare experienced by the passengers seated in the cabin interior 12.

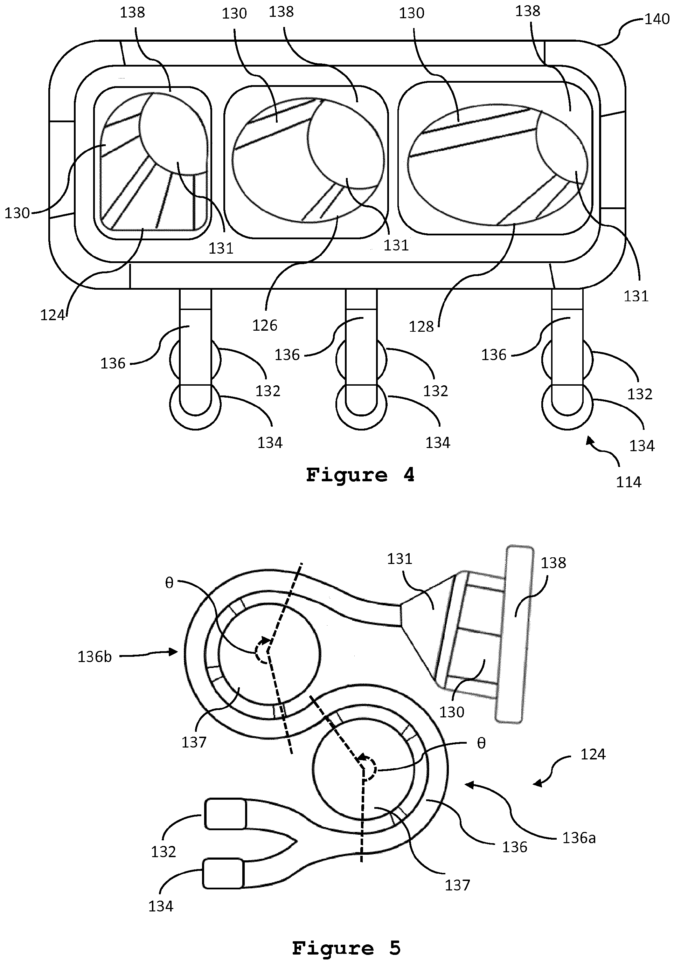

For each of the task, reading and courtesy lighting modules 24, 26 and 28 the upper 30a and lower 30b aperture cones are orientated at an angle to each other, such that the beam of light emitted from the low colour temperature white light 32 and the high colour temperature white light 34 will intersect at a nominal distance from the lighting unit 14. At the point of intersection, the low and high colour temperature white light 32, 34 will mix together, thus illuminating a region of the cabin interior 12 with light of a specific colour temperature according to the relative intensity of each light source. The relative orientation of the upper 30a and lower 30b aperture cones depicted in Figure 4 is for illustration only and is not representative of the actual orientation required to cause the collimated beam of light emitted from the low and high colour temperature white lights 32, 34 to intersect.

In use, a voltage is selectively addressed to the high and low colour temperature white lights 32, 34 in order to alter the brightness and colour temperature of the white light emitted from each lighting module.

The user input for the illumination intensity level is interpreted by the HMI device 22 as a 6 point scale of set point values ranging from 0 to 5, where 0 represents the minimum illumination intensity value and 5 represents the maximum illumination intensity value.

The user input for the colour temperature level is interpreted by the HMI device 22 as a 6 point scale of set point values ranging from 0 to 5, where 0 represents the lowest colour temperature level, 3000K and 5 represents the highest colour temperature level 6000K.

The ambient illumination condition within the cabin interior 12, as sensed by the ambient light sensor, is interpreted by the control module 16 as a 6 point scale ranging from 0 to 5, where 0 represents no ambient light and 5 represents a level of ambient light that would be typical of a bright summer's day.

During operation, an occupant provides a user input, by switching on the task lighting module 24, and by selecting a desired illumination intensity set point value and/or a colour temperature set point value using the HMI device 22. Upon receiving the illumination intensity set point value and colour temperature set point value, the control module 16 compares the user input values with those stored in the look up table, on the memory component of the control module 16, and applies a corresponding voltage to the low and high colour temperature white lights 32, 34.

Upon receiving a user input, the control module 16 also receives a sensed input, from the ambient light sensor, relating to the ambient light level within the cabin interior 12. The control module 16 records the sensed input value along with the user input values on the memory component of the control module 16. The control module 16 continues to receive sensed inputs, which it compares with the first sensed input. If the control module 16 detects that the ambient light condition has changed, it then calculates a new set point value and configures the task lighting module 24 to adjust the illumination output, according to the new set point value, in order to maintain a constant illumination level in the cabin interior.

Alternatively, the user may deactivate the sensing operation of the control module 16, if desired, so that the lighting unit 14 is configured to illuminate the interior cabin 12 according to the received user input values alone.

For example, when an illumination intensity set point value of 5 and a colour temperature set point value of 5 is selected, the control module 16 will apply a voltage to the high colour temperature white light 34 such that it is configured to produce a white light emission with an associated illumination intensity of 120 lumens and a colour temperature of 6000K, whilst the low colour temperature white light 32 remains deactivated. If the vehicle 10 is parked in a garage at the time of receiving the user input value, and hence the cabin interior 12 is in almost complete darkness, the corresponding sensed input value, measured by the ambient light sensor and received by the control module 16, will be 0. Thus the control module 16 will determine that there is no ambient illumination in the cabin interior 12.

The frequency and quantity of recording sensed inputs may vary, according to the application. For example, the sensed ambient light intensity in the cabin could suddenly change if, for example, the vehicle 10 were to pass under a bridge. In order to prevent the lighting system flickering on and off, in a way that could be distracting to the driver of the vehicle 10, the control module 16 monitors the ambient light sensor input over time and takes an average reading. Readings are received from the ambient light sensor approximately every 1 second. Subsequently, the average of every 5 readings is used to control the operation of the lighting unit 14.

Motion sensor input values are received by the control module 16 approximately every second. It is important that the lighting system responds quickly to any changes in the occupancy of the interior cabin, or to any movement of an individual passenger. For example, a passenger reading a newspaper, whilst sitting in the rear of the interior cabin, may adjust their seating position, which could position the newspaper in a poorly lit region of the cabin. In order to limit the delay between the passenger adjusting their seating position and the lighting system illuminating the region of the cabin now occupied by the newspaper, the control module 16 responds to each and every motion sensor input. Hence, the control module 16 calculates a new set point value for each lighting module approximately every second, based on the sensed input values received from the motion sensor.

Figure 4 schematically depicts a front view of a lighting unit 114 according to an alternative embodiment of the invention. Figure 5 depicts a side profile view of a lighting module as shown in the arrangement in Figure 4. The lighting unit 114 shown in Figure 4 includes the same or similar components as the previous embodiment shown in Figures 2 and 3, albeit configured in a different manner. In particular, the Figure 4 embodiment has a task lighting module 124, a reading lighting module 126 and a courtesy lighting module 128, all encased within a module enclosure 140. Within each lighting module comprises a directing optic, a mixing optic 136, a low colour temperature white light 132 and a high colour temperature white light 134, all of which are supported by a light support 138.

The mixing optic 136 is a curved optical lens, held in position by a pair of lens supports 137. The curved optical lens consists of an optically transparent core and an outer optical cladding layer. Due to the total internal reflection of the light at the interface between the core and the cladding, the light is transmitted along the curved optical lens. The curved optical lens is injection moulded out of optical quality materials and includes an optically transparent core, made from polymethylmethacrylate (PMMA) with a refractive index of 1.49, and an outer optical cladding layer, made from silicone resin with a refractive index of 1.46.

For each lighting module, a single directing optic is used to direct the light emitted from the low and high colour temperature white lights 132, 134 into the cabin interior 12. The directing optic includes an aperture cone 130 and a collimating lens 131. The mixing optic 136 is attached to the rear of the collimating lens 131, which in turn is secured to the light support 138 by the aperture cone 130. As before, the inner surface of the parabolic surface may be mirrored so as to reflect the light that is incident upon it. The shape of the aperture cone 130 is such that the light emitted from the low and high colour temperature white lights 132, 134 is transmitted through the curved optical lens, before being collected and reflected out into the cabin interior 12 in the form of a directed beam.

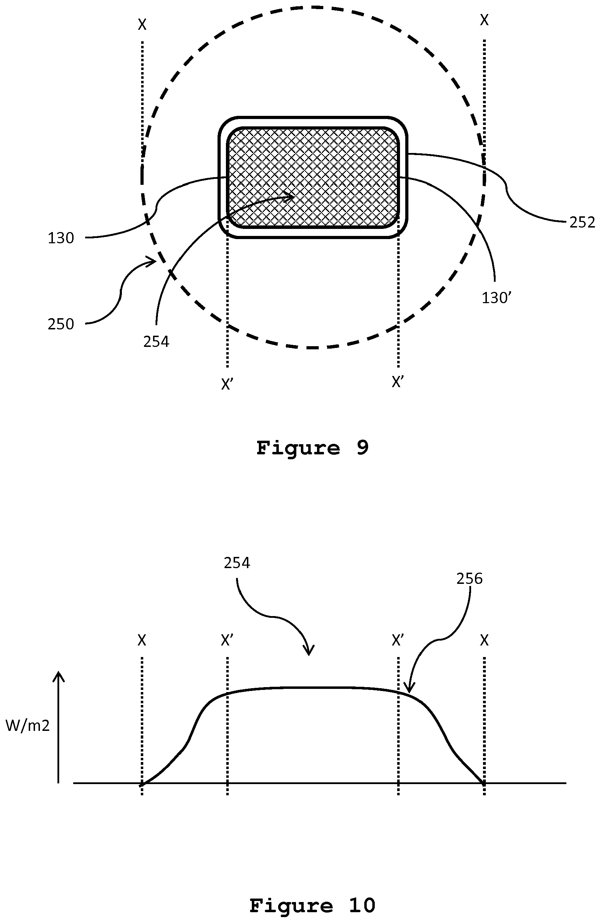

In embodiments of the invention light emitted from the mixing optic 136 is incident to a lens 131 which distributes the light into a substantially wide beam. The lens may be a collimating lens as mentioned above or may be formed of one or more substrates each arranged to diverge incident light. Figure 9 illustrates a perimeter of the distributed light beam 250 from the lens at a target distance. An aperture 130 in the form of a cone, as mentioned before, or any alternative body 252 with a shaped opening 130' is arranged to crop the distributed light beam. Figure 9 illustrates the cropped light beam 254. Figure 10 illustrates an intensity, W/m2, profile 256 of the distributed light beam between the points X-X of Figure 9. As shown the intensity of the distributed light beam drops towards the perimeter of the beam. The cropped region 254 provided by the aperture 130, 130' and indicted between points X'-X' provides a substantially even intensity across its width. The skilled person will appreciate that the term 'width' is used for convenience and that the light intensity across the area of the cropped region 254 is substantially even. This is advantageous in that the cropped light beam provides a direct spot of light with no noticeable edge effects. Furthermore in some embodiments the shape of the aperture 130' is modifiable such that a user of the lighting module 124 or encompassing lighting system can tune the shape to provide a light beam to meet purpose such as illuminating a feature or region of the environment around the lighting module.

Returning to Figure 5 the skilled person will understand that this embodiment differs from the previous embodiment, in which the separate low and high colour temperature white lights 132, 134 each have an associated directing optic component. In the lighting module 124 of Figure 5 only one directing optic is employed to direct light from the lighting module because the light emitted from the low and high colour temperature white lights 132, 134, of each module, has already been mixed by the curved optical lens.

In use, light emitted from each of the high and low colour temperature white lights 132, 134 enters the curved optical lens along a dedicated branch arm. Upon entering the main body of the curved optical lens the light emitted from the low and high colour temperature white lights 132, 134 refracts within the core of the curved optical lens and is thereby mixed together. As the light passes along the fibre body, the refracted light of both the low and high colour temperature white lights 132, 134 continues to mix until it emerges from the curved optical lens end as a diffuse beam of light. The curved optical lens is folded around the two supports 137 so that it is substantially arranged in an S shape, whereby each bend of the lens exhibits an equal curvature. Bending the curved optical lens into an S shape increases the refraction of light within the core and thus enhances the mixing of the light emitted from the low and high colour temperature white lights 132, 134. Optimal mixing occurs when each arc 136a, 136b of the S shaped curved optical lens extends over a region, in a circumferential direction, of an angle θ greater than 200 degrees.

The lighting module 124 may be employed in a lighting unit as described herein. In alternative arrangements the lighting module may be part of a lighting system forming a desk lamp, a standard lamp, an uplighter, and so on for an office or home environment. In embodiments of the invention the lighting system comprises a control module having the features as described herein for varying the intensity of each of the low and high colour temperature white lights. Some embodiments of the lighting system comprise a sensing module as described herein. The skilled person will appreciate that where the lighting system is used in environments other than vehicle cabins that the features of the sensing module are arranged to detect changes in those environments.

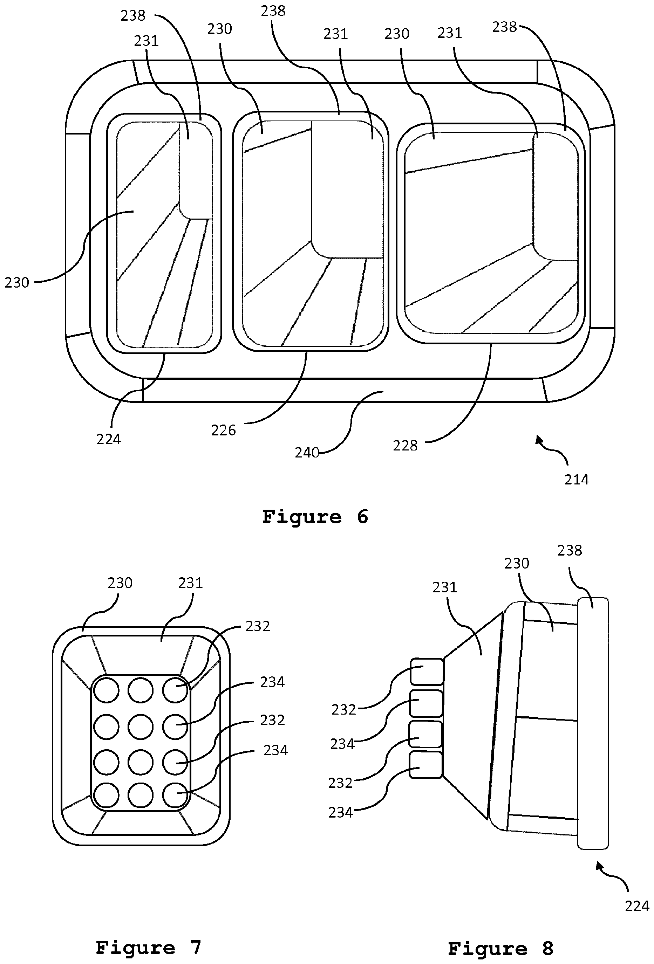

Figure 6, 7 and 8 show an alternative embodiment of the lighting unit 214. The lighting unit 214 includes the same, or similar, components as the previous embodiment shown in Figures 4 and 5, albeit configured in a different manner. In particular, the Figure 6 embodiment has a task lighting module 224, a reading lighting module 226 and a courtesy lighting module 228, all encased within a module enclosure 240. Within each lighting module is a directing optic, a low colour temperature white light 232 and a high colour temperature white light 234, all of which are supported by a light support 238.

The low colour temperature white light 232 takes the form of an array of 12V DC LEDs that produce a combined emission of 120 lumens, within a colour temperature range of 5800-6200K and with a CRI value of >75, whilst consuming 1W of electrical power.

The high colour temperature white light 234 takes the form of an array of 12V DC LEDs that produce a combined emission of 120 lumens, within a colour temperature range of 3000-3500K and at a CRI value of >85, whilst consuming 1W of electrical power. As with the previous embodiment, each lighting module uses a directing optic to direct a single beam of light into the cabin interior 12. The directing optic includes an aperture cone 230 and a collimating lens 231, such that the low and high colour temperature white lights 232, 234 are attached to the rear of the collimating lens 231, which in turn is secured to the light support 238 by the aperture cone 230. The aperture cone 230 has a mirrored inner surface, and is shaped such that the light emitted from the low and high colour temperature white lights 232, 234 is collected and reflected out into the cabin interior 12 in the form of a directed beam. An aperture in the light support 238 enables the directed beam of light to be transmitted out into the cabin interior 12.

The aperture cone 230 is generally of the type described previously with the surface of the aperture cone 230 opening outwardly, away from the light source, so that the diameter of the cone at the outer rim is greater than at all other positions along its axis of symmetry. The effect of this is to decrease the degree to which the emitted light is collimated. The aperture cone 230 takes generally the same form for each module. As with the previous embodiment, only one directing optic is employed to direct light from each lighting module. However, unlike the previous embodiments, the low and high colour temperature white lights 232, 234 are of a sufficiently small package size that they can be positioned closely together. Consequently, the light that is emitted from the low and high colour temperature white lights 232, 234 does not need to pass through a mixing optic, in order for a homogeneous beam of light, to be emitted from the module.

With reference to all embodiments, a user provides a user input during operation of the lighting system, using the HMI device 22. In this example, suppose the user switches on the task lighting module, and selects an illumination intensity set point value of 5 and a colour temperature set point value of 5. Upon receiving the user input values, the control module 16 determines, using data provided by the ambient light sensor, that the ambient illumination level in the cabin interior 12 is 0. Subsequently, the control module 16 configures the high colour temperature white light 34 to produce a white light emission with an illumination intensity of 120 lumens and an associated colour temperature of 6000K, whilst the low colour temperature white light 32 remains deactivated.

At a later time the control module 16 determines, using data provided by the ambient light sensor, that the ambient illumination level in the cabin interior has increased to 2. Consequently the control module 16 compares the most recently sensed value with the originally sensed value and calculates a new illumination intensity set point value to be 3. Subsequently the control module 16 configures the high colour temperature white light 34 to produce a white light emission with an associated illumination intensity of 72 lumens and a colour temperature of 6000K, whilst the low colour temperature white light 32 remains deactivated.

At a later time, the user inputs an illumination intensity set point value of 3 and a colour temperature set point value of 3 using the HMI device 22. Upon receiving the user input values, the control module 16 determines that the ambient illumination level in the cabin interior is still 2. Subsequently, the control module 16 configures the high colour temperature white light 34 to produce a white light emission with an illumination intensity of 43.2 lumens and a colour temperature of 6000K, and configures the low colour temperature white light 32 to produce a white light emission with an associated illumination intensity of 28.8 lumens and a colour temperature of 3000K. Upon mixing of the light emitted from the low and high colour temperature white lights 32, 34 the intensity of the combined emission is approximately 72 lumens, with an associated colour temperature of approximately 5000K.

In a further embodiment of the invention, an occupant is seated in the right rear passenger seat of the interior cabin. The occupant provides a user input to the HMI device 22 instructing the lighting system to illuminate the cabin interior 12 to a nominal brightness and colour temperature level. The sensing module 20 also senses that the occupant is seated in the right rear passenger seat. The control module 16 receives a sensed input value relating to the presence of the occupant and applies a corresponding voltage to the low and high colour temperature white lights 32, 34 of the task lighting module 24.

At a later time, the sensing module 20 senses another occupant seated in the middle rear passenger seat. The control module 16 interprets the new sensed input value and applies a corresponding voltage to the low and high colour temperature white lights 32, 34 of both the task 24 and reading 26 lighting modules. The illumination provided by the reading lighting module 26 illuminates the right rear seat and the middle rear passenger seat, allowing both occupants to see inside the cabin interior 12.

At a later time, the occupant seated in the middle rear passenger seat reaches across to the left rear passenger seat and down into the foot well. Upon sensing the movement of the occupant across the cabin interior 12 to the left rear passenger seat foot well, using data provided by the reflective photoelectric sensor, the control module 16 applies a corresponding voltage to the low and high colour temperature white lights 32, 34 to the task 24, reading 26 and courtesy 28 lighting modules. The illumination provided by the courtesy lighting module 28 illuminates the entire rear cabin, allowing the middle occupant to more easily see where they are reaching.

In embodiments of the invention, the initial values of the lookup table that are stored on the memory of the control module 16 are amendable such that they can be altered to suit the interior of different vehicle models. When installing the lighting system in a vehicle 10 with a red interior trim, the interior colour will appear washed out if the CRI of the light source is too low. Therefore, upon installing the lighting system in a vehicle 10 with a red interior trim, the voltage values of the look-up table, stored on the memory component of the control module 16, will be modified to favour illuminating the interior cabin with a white light with associated CRI values that are greater than 85.

The look up table stored in the memory component of the control module 16 can be altered according to an individual user's preferences. A user may input a set of illumination intensity and colour temperature input values, which are interpreted by the control module and used to update the existing set point values. During any subsequent operation of the lighting system, corresponding voltages are addressed to the low and high colour temperature white lights 32, 34 based on the updated colour temperature and illumination intensity set point values. The application of the individual user's preferences could be applied at the point of installation for the lighting system or alternatively they could be installed upon sensing the user's presence within the vehicle 10.

In embodiments of the invention, the sensing module 20 provides sensed inputs, which relate to the position of an occupant, within the cabin interior 12, based on the position of a seat of an occupant of the vehicle. The seat includes a seat adjustment assembly, which is well known in the art, and allows for the seat to be arranged in a number of variable positions. The seat adjustment assembly is configured to receive seat adjustment input values from an occupant of the seat and is also configured to adjust the position of the seat according to the seat adjustment input value. During operation, the sensing module 20 receives a seat adjustment input value from the seat adjustment assembly, which it transmits to the control module 16 of the lighting system in the form of a sensed input. The control module 16 receives a sensed input value, relating to the occupant's seating position, and applies a corresponding voltage to the low and high colour temperature white lights 32, 34 of the task lighting module 24, in order to effectively illuminate the occupant's working area.

In a still further embodiment, a number of pre-defined control schedules are stored on the memory component of the control module 16. The control schedules include illumination intensity and colour temperature set point values together with corresponding time period values. Upon selecting a control schedule, the control module 16 configures the low and high colour temperature white lights 32, 34 to emit light, according to the initial set point values, stored within the control schedule. After the initial time period has elapsed, the next set of illumination intensity and colour temperature set point values are read from the control schedule and applied to the lighting module.

An example of such a control schedule is the sleep control schedule, in which the illumination intensity and colour temperature set point values are both initially set to 3. After one minute, the colour temperature set point value is maintained at 3, whilst the illumination intensity set point value is reduced to 2. After a second minute has elapsed, the illumination intensity set point value is reduced to 1, and then after a third minute has elapsed, it is finally reduced to 0. By operating in this way, the lighting system 14 is able to mimic a sunset, thereby helping the passengers to fall asleep.

A further example of such a control schedule is the circadian control schedule, in which the illumination intensity and colour temperature set point values are set according to a particular time of day. The control schedule is divided into 24, one hour time periods, corresponding to a 24 hour clock. Between 0600 hours and 0700 hours the illumination intensity and colour temperature set point values are both set to 1. Both set point values are gradually increased throughout the morning until the maximum set point value of 5 is reached at 1200 noon. Moving into the afternoon the set point values are gradually reduced until the set point values both return to 1 at 2000 hours.

By operating in this way, the lighting system encourages the vehicle occupants to maintain a healthy circadian rhythm. It has been shown that there are significant health benefits associated with adhering to the body's natural circadian rhythm, in particular, with regard to maintaining a healthy sleep regime. By using the control module 16 to vary the illumination intensity and colour temperature of the emitted light, according to the time of day, the lighting system is also able to supplement the naturally occurring light within the cabin interior 12.

In a still further embodiment of the invention, the lighting unit is mounted to an end of an articulated arm arrangement, wherein the opposing end of the arm arrangement is fixedly attached to the cabin interior of the vehicle. When not in use, the lighting unit can be stowed in a stowage recess, which is formed within an armrest, a seatback, a roof pillar or any interior trim member.

It will be appreciated by a person skilled in the art that the invention could be modified to take many alternative forms without departing from the scope of the appended claims.

## Claims

1. A lighting module (124) comprising:
a low colour temperature white light (132) and a high colour temperature white light (134) each arranged to emit light into a mixing optic (136) configured to mix light emitted from the low colour temperature white light and the high colour temperature white light;
a lens (131) arranged to distribute mixed light emitted from the mixing optic; and
a body (130) comprising an aperture arranged to crop the distributed mixed light emitted from the lens. (131) wherein the mixing optic (136) is substantially S shaped and comprises two arcs having an equal and opposite curvature.

2. A lighting module according to claim 1 wherein each arc has an arc angle θ of greater than 200 degrees.

3. A lighting module according to claim 1 or claim 2 wherein the body comprises an aperture cone.

4. A lighting module according to any of claims 1 to 3 wherein the aperture has a modifiable shape.

5. A lighting module according to any of claims 1 to 3 wherein the mixing optic comprises an optical lens.

6. A lighting module according to any preceding claim comprising two supports arranged to support the arcs of the mixing optic.

7. A lighting module according to any preceding claim wherein the lens and aperture are movable with respect to the mixing optic to direct mixed light emitted from the mixing optic.

8. A lighting module according to any preceding claim, wherein:
the low colour temperature white light is arranged to emit light with a correlated colour temperature of between about 2700K and about 3500K and a colour rendering index of at least 85; and/or
the high colour temperature white light is arranged to emit light with a correlated colour temperature of between about 5800K and about 6500K and a colour rendering index of at least 75.

9. A lighting system comprising a lighting module having the features of the lighting module as claimed in any one of claims 1 to 8 and a control module arranged to vary the intensity of light emitted by the low colour temperature white light and/or the high colour temperature white light.

10. A lighting system according to claim 9 comprising a sensing module arranged to sense a physical parameter of an environment surrounding the lighting module, wherein the control module is configured to vary the intensity of light emitted by the low temperature white light and/or the high temperature white light in dependence on the physical parameter.

11. A lighting system according to Claim 10, wherein the sensing module comprises at least one of:
an ambient light sensor arranged to detect the ambient light levels of the environment; and
a motion sensor arranged to detect movement in the environment.

12. A lighting system according to any of claims 9 to 11, wherein the control module is configured to receive a user input and to vary the intensity of light emitted by the low temperature white light and/or the high temperature white light in response to the user input.

13. A lighting system according to Claim 12, wherein the control module is configured to:
receive a user-selected illumination intensity input value and to vary the intensity of light emitted by the low colour temperature white light and/or the high colour temperature white light in response to the user-selected illumination intensity input value; and/or
receive a user-selected colour temperature input value and to vary the intensity of light emitted by the low colour temperature white light and/or the high colour temperature white light in response to the user-selected colour temperature input value.

14. A lighting system according to any of claims 9 to 13, wherein the control module comprises a control schedule relating illumination intensity set point values to specific periods of the day, and wherein the control module is configured to vary the intensity of light emitted by the low colour temperature white light and/or the high colour temperature white light; based on the control schedule.

15. A vehicle having a cabin interior comprising:
a lighting module having the features of the lighting module as claimed in any one of claims 1 to 8 and/or
a lighting system having the features of the lighting system as claimed in any one of claims 9 to 14.

## Patentansprüche

1. Beleuchtungsmodul (124), Folgendes umfassend:
ein weißes Licht mit niedriger Farbtemperatur (132) und ein weißes Licht mit hoher Farbtemperatur (134), jeweils angeordnet, Licht in ein optisches Mischelement (136) zu emittieren, das konfiguriert ist, von dem weißen Licht mit niedriger Farbtemperatur und dem weißen Licht mit hoher Farbtemperatur emittiertes Licht zu mischen;
eine Linse (131), die angeordnet ist, gemischtes Licht von dem optischen Mischelement zu verteilen; und
einen Körper (130), der eine Apertur umfasst, die angeordnet ist, das verteilte gemischte Licht, das von der Linse (131) emittiert wird, zu kürzen, wobei das optische Mischelement (136) im Wesentlichen S-förmig ist und zwei Bögen umfasst, die eine gleiche und gegensätzliche Biegung aufweisen.

2. Beleuchtungsmodul nach Anspruch 1, wobei jeder Bogen einen Bogenwinkel θ von mehr als 200 Grad aufweist.

3. Beleuchtungsmodul nach Anspruch 1 oder 2, wobei der Körper einen Aperturkegel aufweist.

4. Beleuchtungsmodul nach einem der Ansprüche 1 bis 3, wobei die Apertur eine veränderbare Form aufweist.

5. Beleuchtungsmodul nach einem der Ansprüche 1 bis 3, wobei das optische Mischelement eine optische Linse umfasst.

6. Beleuchtungsmodul nach einem der vorhergehenden Ansprüche, umfassend zwei Stützen, die angeordnet sind, die Bögen des optischen Mischelements zu stützen.

7. Beleuchtungsmodul nach einem der vorhergehenden Ansprüche, wobei die Linse und die Apertur im Verhältnis zu dem optischen Mischelement bewegt werden können, um gemischtes Licht, das von dem optischen Mischelement emittiert wird, auszurichten.

8. Beleuchtungsmodul nach einem der vorhergehenden Ansprüche, wobei:
das weiße Licht mit niedriger Farbtemperatur angeordnet ist, Licht mit einer korrelierten Farbtemperatur zwischen etwa 2700 K und etwa 3500 K und einem Farbwiedergabeindex von wenigstens 85 zu emittieren; und/oder
das weiße Licht mit hoher Farbtemperatur angeordnet ist, Licht mit einer korrelierten Farbtemperatur zwischen etwa 5800 K und etwa 6500 K und einem Farbwiedergabeindex von wenigstens 75 zu emittieren.

9. Beleuchtungssystem, umfassend ein Beleuchtungsmodul, das die Merkmale des Beleuchtungsmoduls nach einem der Ansprüche 1 bis 8 aufweist, und ein Steuermodul, das angeordnet ist, die Intensität des von dem weißen Licht mit niedriger Farbtemperatur und/oder dem weißen Licht mit hoher Farbtemperatur emittierten Lichts zu variieren.

10. Beleuchtungssystem nach Anspruch 9, umfassend ein Erfassungsmodul, das angeordnet ist, einen physischen Parameter einer Umgebung, die das Beleuchtungsmodul umgibt, zu erfassen, wobei das Steuermodul konfiguriert ist, die Intensität des von dem weißen Licht mit niedriger Temperatur und/oder dem weißen Licht mit hoher Temperatur emittierten Lichts in Abhängigkeit von dem physischen Parameter zu variieren.

11. Beleuchtungssystem nach Anspruch 10, wobei das Erfassungsmodul wenigstens eines der Folgenden umfasst:
einen Grundlichtsensor, der angeordnet ist, die Grundlichtniveaus der Umgebung zu erkennen; und
einen Bewegungssensor, der angeordnet ist, Bewegung in der Umgebung zu erkennen.

12. Beleuchtungssystem nach einem der Ansprüche 9 bis 11, wobei das Steuermodul konfiguriert ist, eine Benutzereingabe zu erhalten und die Intensität des von dem weißen Licht mit niedriger Temperatur und/oder dem weißen Licht mit hoher Temperatur emittierten Lichts in Reaktion auf die Benutzereingabe zu variieren.

13. Beleuchtungssystem nach Anspruch 12, wobei das Steuermodul konfiguriert ist zum:
Erhalten eines durch einen Benutzer ausgewählten Ausleuchtungsintensitätseingabewerts und Variieren der Intensität des von dem weißen Licht mit niedriger Farbtemperatur und/oder dem weißen Licht mit hoher Farbtemperatur emittierten Lichts in Reaktion auf den durch den Benutzer ausgewählten Ausleuchtungsintensitätseingabewert; und/oder
Erhalten eines durch einen Benutzer ausgewählten Farbtemperatureingabewerts und Variieren der Intensität des von dem weißen Licht mit niedriger Farbtemperatur und/oder dem weißen Licht mit hoher Farbtemperatur emittierten Lichts in Reaktion auf den durch einen Benutzer ausgewählten Farbtemperatureingabewert.

14. Beleuchtungssystem nach einem der Ansprüche 9 bis 13, wobei das Steuermodul einen Steuerzeitplan umfasst, der Ausleuchtungsintensitätssollwerte mit spezifischen Tageszeiten in Bezug setzt, und wobei das Steuermodul konfiguriert ist, die Intensität des von dem weißen Licht mit niedriger Farbtemperatur und/oder dem weißen Licht mit hoher Farbtemperatur emittierten Lichts zu variieren; auf Grundlage des Steuerzeitplans.

15. Fahrzeug mit einem Kabineninnenraum, Folgendes umfassend:
ein Beleuchtungsmodul, das die Merkmale des Beleuchtungsmoduls nach einem der Ansprüche 1 bis 8 aufweist, und/oder
ein Beleuchtungssystem, das die Merkmale des Beleuchtungssystems nach einem der Ansprüche 9 bis 14 aufweist.

## Revendications

1. Module d'éclairage (124) comprenant :
une lumière blanche à basse température de couleur (132) et une lumière blanche à haute température de couleur (134) agencées chacune pour émettre de la lumière dans une optique de mélange (136) configurée pour mélanger la lumière émise par la lumière blanche à basse température de couleur et la lumière blanche à haute température de couleur ;
une lentille (131) agencée pour distribuer la lumière mélangée émise par l'optique de mélange ; et
un corps (130) comprenant une ouverture agencée pour réduire la lumière mélangée distribuée émise par la lentille (131),
l'optique de mélange (136) étant sensiblement en forme de S et comprenant deux arcs ayant une courbure égale et opposée.

2. Module d'éclairage selon la revendication 1, dans lequel chaque arc a un angle d'arc θ supérieur à 200 degrés.

3. Module d'éclairage selon la revendication 1 ou la revendication 2, dans lequel le corps comprend un cône d'ouverture.

4. Module d'éclairage selon l'une quelconque des revendications 1 à 3, dans lequel l'ouverture a une forme modifiable.

5. Module d'éclairage selon l'une quelconque des revendications 1 à 3, dans lequel l'optique de mélange comprend une lentille optique.

6. Module d'éclairage selon une quelconque revendication précédente, comprenant deux supports agencés pour supporter les arcs de l'optique de mélange.

7. Module d'éclairage selon une quelconque revendication précédente, dans lequel la lentille et l'ouverture sont mobiles par rapport à l'optique de mélange pour diriger la lumière mélangée émise par l'optique de mélange.

8. Module d'éclairage selon une quelconque revendication précédente, dans lequel :
la lumière blanche à basse température de couleur est agencée pour émettre de la lumière avec une température de couleur corrélée comprise entre environ 2 700 K et environ 3 500 K et un indice de rendu de couleur d'au moins 85 ; et/ou
la lumière blanche à haute température de couleur est agencée pour émettre de la lumière avec une température de couleur corrélée comprise entre environ 5 800 K et environ 6 500 K et un indice de rendu de couleur d'au moins 75.

9. Système d'éclairage comprenant un module d'éclairage ayant les caractéristiques du module d'éclairage selon l'une quelconque des revendications 1 à 8 et un module de commande agencé pour faire varier l'intensité de la lumière émise par la lumière blanche à basse température de couleur et/ou la lumière blanche à haute température de couleur.

10. Système d'éclairage selon la revendication 9, comprenant un module de détection agencé pour détecter un paramètre physique d'un environnement entourant le module d'éclairage, le module de commande étant configuré pour faire varier l'intensité de la lumière émise par la lumière blanche à basse température et/ou la lumière blanche à haute température en fonction du paramètre physique.

11. Système d'éclairage selon la revendication 10, dans lequel le module de détection comprend au moins l'un des éléments suivants :
un capteur de lumière ambiante agencé pour détecter les niveaux de lumière ambiante de l'environnement ; et
un capteur de mouvement agencé pour détecter un mouvement dans l'environnement.

12. Système d'éclairage selon l'une quelconque des revendications 9 à 11, dans lequel le module de commande est configuré pour recevoir une entrée d'utilisateur et pour faire varier l'intensité de la lumière émise par la lumière blanche à basse température et/ou la lumière blanche à haute température en réponse à l'entrée d'utilisateur.

13. Système d'éclairage selon la revendication 12, dans lequel le module de commande est configuré pour :
recevoir une valeur d'entrée d'intensité d'éclairage sélectionnée par l'utilisateur et pour faire varier l'intensité de la lumière émise par la lumière blanche à basse température de couleur et/ou la lumière blanche à haute température de couleur en réponse à la valeur d'entrée d'intensité d'éclairage sélectionnée par l'utilisateur ; et/ou
recevoir une valeur d'entrée de température de couleur sélectionnée par l'utilisateur et pour faire varier l'intensité de la lumière émise par la lumière blanche à basse température de couleur et/ou la lumière blanche à haute température de couleur en réponse à la valeur d'entrée de température de couleur sélectionnée par l'utilisateur.

14. Système d'éclairage selon l'une quelconque des revendications 9 à 13, dans lequel le module de commande comprend un programme de commande associant des valeurs de point de consigne d'intensité d'éclairage à des périodes spécifiques de la journée, et le module de commande étant configuré pour faire varier l'intensité de la lumière émise par la lumière blanche à basse température de couleur et/ou la lumière blanche à haute température de couleur ; sur la base du programme de commande.

15. Véhicule ayant un habitacle comprenant :
un module d'éclairage ayant les caractéristiques du module d'éclairage selon l'une quelconque des revendications 1 à 8 et/ou
un système d'éclairage ayant les caractéristiques du système d'éclairage selon l'une quelconque des revendications 9 à 14.
